# EUROPÄISCHE PATENTANMELDUNG

(11) **EP 0 543 347 A1**
(43) Veröffentlichungstag der Anmeldung: **26.05.1993**
(21) Anmeldenummer: 92119638.2
(22) Anmeldetag: 17.11.1992
(51) Int. Cl.: C01F 7/02, C01F 7/44, C04B 35/10

(54) **Verfahren zur Herstellung von alpha-Aluminiumoxid-Pulver**

(30) Priorität: 22.11.1991 CH 3430/91
(71) Anmelder: H.C. Starck GmbH & Co. KG, D-38642 Goslar (DE)
(72) Erfinder: Van Dijen, Franciscus, Dr., Dettighofen (DE)
(74) Vertreter: Weinhold, Peter, Dr.

(57) **Zusammenfassung**

Aluminiumoxidpulver mit hohem α-Anteil, Kristallitgrössen von ca. 0,1 µm und enger Teilchengrössenverteilung werden aus gewöhnlichem Bayer-Aluminiumhydroxid (Gibbsit) oder bei niedriger Temperatur kalzinierten Aluminiumoxid hergestellt. Das Ausgangsmaterial wird nass desagglomeriert, mit α-Aluminiumoxid-Keimen gemischt, getrocknet und kalziniert. Bei der Kalzination entstehen Agglomerate, die bereits die geforderte Kristallitgrösse aufweisen und nur noch auf die gewünschte Teilchengrösse desagglomeriert werden müssen.
Die erfindungsgemäss hergestellten α-Aluminiumoxid-Pulver eignen sich insbesondere als Ausgangsmaterial zur Herstellung von Hochleistungskeramik, beispielsweise von Schneidplatten.

## Beschreibung

Die vorliegende Erfindung betrifft ein Verfahren zur Herstellung von feinstteiligem α-Aluminiumoxid-Pulver, insbesondere für die Herstellung von Hochleistungskeramik, aus Aluminiumhydroxid (Gibbsit bzw. Hydrargillit) oder bei niedriger Temperatur kalziniertem Aluminiumoxid.

α-Aluminiumoxid-Pulver wird seit vielen Jahrzehnten durch Kalzination von Aluminiumhydroxid hergestellt. Die Kalzinationstemperatur liegt dabei üblicherweise über 1300°C.
Mit steigender Kalzinationstemperatur erhöht sich der Anteil an α-Aluminiumoxid, aber gleichzeitig auch die Primärkristallgrösse. Die spezifische Oberfläche des Produkts wird dagegen mit zunehmender Kalzinationstemperatur kleiner. Für die Verwendung zur Herstellung von Hochleistungskeramik werden Pulver mit Teilchengrössen unter 1 µm bevorzugt. Bei der gewöhnlichen Kalzination entstehen jedoch Agglomerate, die aus Primärkristallen der Grössenordnung 2 bis 10 µm zusammengesetzt sind, so dass es erforderlich ist, das Pulver anschliessend zu mahlen. Dabei werden nicht nur die Agglomerate zerstört, sondern auch die Primärkristalle zerkleinert. Nachteile dieser Verfahrensweise sind der hohe Zeit- und Energieaufwand für die Mahlung und die Notwendigkeit besonderer Mahlverfahren, um nicht nur die gewünschte Endfeinheit zu erreichen, sondern auch Kontamination durch Abrieb aus der Mahlvorrichtung zu vermeiden. Schliesslich werden die Eigenschaften der so erhältlichen α-Aluminiumoxid-Pulver auch durch ihre breite Korngrössenverteilung und die unregelmässige Kornform beeinträchtigt. Zur Erzielung optimaler Resultate in der Hochleistungskeramik, sind dagegen Pulver mit engen Korngrössenverteilungen und kompakten ("equiaxed") Teilchen erforderlich, die trotz der kompakten Teilchen eine grosse spezifische Oberfläche besitzen. Derartige Pulver werden seit einigen Jahren aus Böhmit (AlOOH) nach dem "seeded gel"-Verfahren hergestellt. Hierbei wird Böhmit nass mit α-Al₂O₃-Keimen gemischt, geliert, getrocknet, kalziniert und nass desagglomeriert. Ein Nachteil des Verfahrens ist der hohe Preis des Ausgangsmaterials Böhmit.

Aufgabe der vorliegenden Erfindung war es, ein Verfahren zur Herstellung von α-Aluminiumoxid-Pulver bereitzustellen, das von preiswerten Rohstoffen ausgeht und ein Pulver mit enger Korngrössenverteilung liefert, das keine zusätzliche Mahlung zur Erhöhung der spezifischen Oberfläche erforderlich macht.

Erfindungsgemäss wird diese Aufgabe durch das Verfahren nach Patentanspruch 1 gelöst.

Es wurde überraschend gefunden, dass es durch eine geeignete Kombination von Verfahrensschritten möglich ist, auch aus gewöhnlichem technischem Aluminiumhydroxid (Al(OH)₃, Gibbsit, auch als Hydrargillit bezeichnet), wie es bei dem Bayer-Verfahren anfällt, α-Aluminiumoxid-Pulver mit einer Kristallitgrösse von weniger als 1 µm, vorzugsweise sogar weniger als 0,3 µm, und einer spezifischen Oberfläche von 5 bis 100 m²/g ohne Mahlung des α-Aluminiumoxids herzustellen.

Anstelle des Aluminiumhydroxids können für das erfindungsgemässe Verfahren auch bei tiefer Temperatur kalzinierte Aluminiumoxide oder Gemische aus letzteren und Aluminiumhydroxid eingesetzt werden. Die bei tiefer Temperatur kalzinierten Aluminiumoxide enthalten noch etwas Wasser, beispielsweise ca. 8 Gew.% und wandeln sich bei der erfindungsgemässen Behandlung durch Wasseraufnahme wieder in Aluminiumhydroxid um, wie durch thermogravimetrische Untersuchung der getrockneten Suspension gezeigt werden kann.

Erfindungsgemäss wird das als Ausgangsmaterial dienende Aluminiumhydroxid oder bei tiefer Temperatur kalzinierte Aluminiumoxid zunächst nass gemahlen bzw. desagglomeriert, um die herstellungsbedingt vorliegenden Agglomerate in die einzelnen Kristallite zu zerteilen. Die Desagglomeration oder Mahlung wird vorzugsweise in einem Attritor, einer Vibrationsmühle oder einer Rührwerkskugelmühle durchgeführt, wobei als Mahlkörper vorzugsweise solche Verwendung finden, die ganz oder überwiegend aus Aluminiumoxid bestehen. Die Flüssigkeitsmenge wird vorzugsweise so gewählt, dass eine Suspension mit einem Feststoffgehalt von 10 bis 40 Gew.% resultiert. Als Flüssigkeit wird vorzugsweise Wasser verwendet. Der Aluminiumhydroxidsuspension werden zweckmässig Kristallisationskeime zugesetzt, vorzugsweise solche aus α-Aluminiumoxid.
Diese Keime können beispielsweise auf einfache Weise durch Mahlen von α-Aluminiumoxid, zum Beispiel in Form von kalzinierter Tonerde, auf eine Partikelgrösse <1 µm erhalten werden.

Die Keime werden vorzugsweise in einer Menge von 1 bis 5 Gew.%, bezogen auf die Gesamtmenge (gerechnet als Al₂O₃) zugegeben und gründlich untergemischt. Besonders bevorzugt ist eine Zugabe am Anfang oder während der Desagglomeration oder Mahlung des Ausgangsmaterials. Ausser den Kristallisationskeimen können gegebenenfalls noch Hilfs- oder Zusatzstoffe, wie beispielsweise Entschäumer, Sinterhilfsmittel, Kornwachstumshemmer, Verflüssiger etc., zugesetzt werden. Für das erfindungsgemässe Verfahren sind solche Zusatzstoffe jedoch nicht erforderlich.

Die so erhaltene Suspension wird anschliessend getrocknet, beispielsweise mittels Sprühtrocknung. Das so erhaltene Material wird anschliessend kalziniert. Die Kalzinationstemperatur liegt zweckmässig bei 1000 bis 1300°C, vorzugsweise bei 1100 bis 1200°C.

Das erfindungsgemäss hergestellte Pulver zeichnet sich durch einen hohen α-Anteil, eine hohe spezifische Oberfläche und eine Kristallitgrösse in der Grössenordnung von 0,1 µm aus. Nach der Kalzination ist das Pulver stark agglomeriert und muss noch einer Behandlung zur Desagglomeration unterzogen werden.

Auch diese Desagglomeration wird vorzugsweise in einem Attritor, einer Vibrationsmühle oder einer Rührwerkskugelmühle durchgeführt, wobei wiederum vorzugsweise Mahlkörper aus Aluminiumoxid verwendet werden. Die Korngrössenverteilung nach der Desagglomeration hängt von der Dauer der Desagglomerationsbehandlung und dem Feststoffanteil bei der Behandlung ab. Durch geeignete Wahl der Parameter lassen sich beispielsweise bei Feststoffgehalten von 25% und Behandlungsdauern in der Grössenordnung von 1 h Korngrössenverteilungen erreichen, bei denen 90% des Materials eine Korngrösse von weniger als ca. 0,4 µm aufweisen. Die mittlere Korngrösse ist dabei nur wenig grösser als die mittlere Kristallitgrösse und es findet keine nennenswerte Zerkleinerung der einzelnen Kristalle statt.

Die nachfolgenden Beispiele verdeutlichen die Durchführung des erfindungsgemässen Verfahrens.

### Beispiel 1

In einem Attritor (0,6 l) wurden 70 g bei niedriger Temperatur kalziniertes Aluminiumoxid (Typ AX, Martinswerk GmbH, D-W 5010 Bergheim) in entsalztem Wasser unter Zusatz von 1,0 Gew. % (bezogen auf das Aluminiumoxid) α-Aluminiumoxidkeimen mit Aluminiumoxid-Mahlkugeln (d = 1 mm) 1 h gemahlen und desagglomeriert. Die Agglomeratgrösse war nach dem Mahlen zu 100% <1 µm. Die α-Aluminiumoxidkeime wurden durch Mahlen von hochtemperaturkalziniertem Aluminiumoxid im Attritor auf eine Teilchengrösse <0,5 µm gewonnen. Der pH wurde durch Zugabe von Salzsäure auf 2 eingestellt. Die Suspension wurde im Trockenschrank bei 70°C getrocknet. Das getrocknete Material wurde auf eine Partikelgrösse <0,1 mm gemahlen und 30 min bei 1150°C kalziniert. Die spezifische Oberfläche (nach BET) des kalzinierten Produkts war 20 m²/g, der α-Anteil 94%.

### Beispiel 2

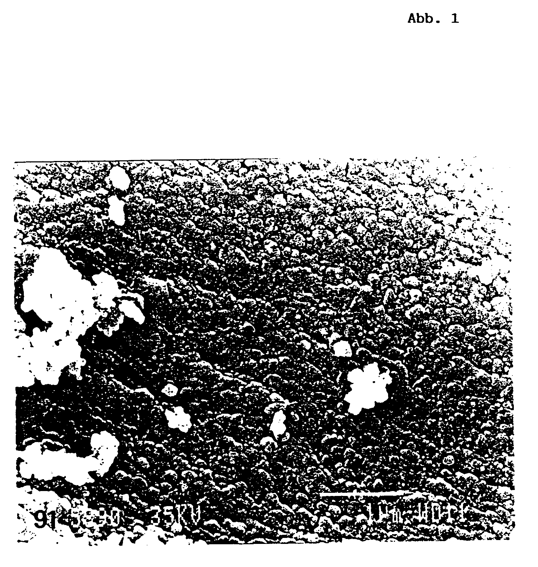

Es wurde wie in Beispiel 1 beschrieben verfahren, jedoch wurde das Material anstelle bei 1150°C bei 1200°C kalziniert. Die spezifische Oberfläche war 14 m²/g, der α-Anteil 100%.
Die mittlere Kristallitgrösse nach dem Kalzinieren betrug 0,11 µm.
Das so erhaltene, noch agglomerierte Produkt ist in Abb. 1 dargestellt. Die REM-Aufnahme zeigt deutlich die lockere Agglomeratstruktur aus Kristalliten der Grössenordnung 0,1 µm. Das kalzinierte Material wurde im Attritor in Wasser bei einem Feststoffgehalt von 50% bzw. 25% eine Stunde desagglomeriert. Als Mahlkörper wurden Aluminiumoxidkugeln mit 1 mm Durchmesser verwendet.
Die Korngrössenverteilung (bestimmt nach der Laserstreuungsmethode, Angaben in Vol.%) war:

| Desagglomeration bei 50% Feststoffgehalt | | Desagglomeration bei 25% Feststoffgehalt | |
|---|---|---|---|
| 90% | <0,7 µm | 90% | <0,3 µm |
| 50% | <0,2 µm | 50% | <0,2 µm |
| 10% | <0,1 µm | 10% | <0,1 µm |

### Beispiel 3 (Vergleichsbeispiel)

Es wurde wie in Beispiel 2 beschrieben verfahren, jedoch wurde das Ausgangsmaterial nicht desagglomeriert und es wurden keine α-Aluminiumoxidkeime zugemischt. Die spezifische Oberfläche war 11 m²/g, der α-Anteil jedoch nur 75%.
Die mittlere Kristallgrösse betrug 0,14 µm.

### Beispiel 4 (Vergleichsbeispiel)

Ein handelsübliches α-Aluminiumoxidpulver (Typ CS-400/M, Martinswerk), das nach dem Stand der Technik durch Kalzinieren von Aluminiumhydroxid ohne Desagglomeration und ohne Keimzusatz hergestellt und vermahlen wurde (Korngrössenverteilung: 90% <1,3 µm, 50% <0,8 µm und 10% <0,2 µm, spezif. Oberfläche 11 m²/g), wurde zusätzlich, wie in Beispiel 2 beschrieben, bei 25% Feststoffgehalt 1 h im Attritor behandelt. Danach war die Korngrössenverteilung 90% <0,7 µm, 50% <0,3 µm, 10% <0,15 µm, also wesentlich breiter und grobkörniger als nach dem entsprechenden erfindungsgemässen Beispiel, obwohl das Material bereits nach der Kalzination gemahlen worden war.

## Patentansprüche

1. Verfahren zur Herstellung von feinstteiligen α-Aluminiumoxid-Pulver durch Herstellen einer Suspension aus einem Vorläufer von α-Aluminiumoxid und gegebenenfalls üblichen Zusätzen, Trocknen, Kalzinieren und Mahlen oder Desagglomerieren, dadurch gekennzeichnet, dass als Vorläufer von α-Aluminiumoxid Aluminiumhydroxid (Al(OH)₃) oder ein daraus durch Kalzination bei niedriger Temperatur erhaltenes Aluminiumoxid eingesetzt und zur Bildung der Suspension einer Mahl- und Desagglomerationsbehandlung unterzogen wird.

2. Verfahren nach Patentanspruch 1, dadurch gekennzeichnet, dass als Aluminiumhydroxid das bei der Tonerdeherstellung nach dem Bayer-Verfahren anfallende Aluminiumhydroxid eingesetzt wird.

3. Verfahren nach Patentanspruch 1 oder 2, dadurch gekennzeichnet, dass die Mahl- und Desagglomerationsbehandlung mit einem Attritor, einer Vibrationsmühle oder einer Rührwerkskugelmühle durchgeführt wird.

4. Verfahren nach Patentanspruch 3, dadurch gekennzeichnet, dass der Attritor, die Vibrationsmühle oder die Rührwerksmühle mit überwiegend aus α-Aluminiumoxid bestehenden Mahlkörpern betrieben wird.

5. Verfahren nach einem oder mehreren der Patentansprüche 1 bis 4, dadurch gekennzeichnet, dass die Suspension Kristallisationskeime aus α-Aluminiumoxid zugesetzt werden.

6. Verfahren nach einem oder mehreren der Patentansprüche 1 bis 5, dadurch gekennzeichnet, dass das Kalzinieren bei einer Temperatur von 1000 bis 1300°C durchgeführt wird.

7. Verfahren nach einem oder mehreren der Patentansprüche 1 bis 6, dadurch gekennzeichnet, dass das Kalzinieren bei einer Temperatur von 1100 bis 1200°C durchgeführt wird.

8. Pulver auf Basis von α-Aluminiumoxid und gegebenenfalls Zusätzen von weiteren Oxiden, erhältlich durch das Verfahren gemäss Patentanspruch 1.

9. α-Aluminiumoxid-Pulver nach Patentanspruch 8, gekennzeichnet durch eine Primärkristallgrösse kleiner als 0,3 µm.

10. Verwendung des α-Aluminiumoxid-Pulvers nach Patentanspruch 8 zur Herstellung von gesintertem α-Aluminiumoxid, zum Beispiel als Schneidkeramik.
